Europäisches Patentamt

European Patent Office

Office européen des brevets

(19)

(11) Numéro de publication : **0 030 890**
**B1**

(12) **FASCICULE DE BREVET EUROPÉEN**

(45) Date de publication du fascicule du brevet :
05.10.83

(51) Int. Cl.³ : **B 23 K   1/06**

(21) Numéro de dépôt : **80401761.4**

(22) Date de dépôt : **09.12.80**

(54) **Procédé et dispositif pour le brasage sans flux.**

(30) Priorité : **17.12.79 FR 7930824**

(43) Date de publication de la demande :
**24.06.81 Bulletin 81/25**

(45) Mention de la délivrance du brevet :
**05.10.83 Bulletin 83/40**

(84) Etats contractants désignés :
**BE DE GB IT LU NL SE**

(56) Documents cités :
**DE B 2 728 634**
**FR A 2 346 095**
**US A 3 752 381**
**US A 3 942 705**

(73) Titulaire : **CENTRE TECHNIQUE DES INDUSTRIES MECANIQUES**
**52, avenue Félix-Louat B.P. 67**
**F-60304 Senlis Cedex (FR)**

(72) Inventeur : **Le Penven, Yves**
**14, rue Yvonne**
**F-94120 Fonteny sous Bois (FR)**
Inventeur : **Gabard, Daniel**
**43, rue du Télégraphe**
**F-75020 Paris (FR)**

(74) Mandataire : **Fedit, René et al**
**S.A.FEDIT-LORIOT (Cabinet Guerblisky) 38 avenue Hoche**
**F-75008 Paris (FR)**

Jouve, 18, rue St-Denis, 75001 Paris, France

EP 0 030 890 B1

## Procédé et dispositif pour le brasage sans flux

La présente invention concerne un procédé perfectionné pour le brasage de pièces métalliques, ainsi qu'un dispositif et un métal d'apport pour la mise en œuvre de ce procédé.

Elle vise plus particulièrement le brasage de pièces, notamment de tubes en aluminium, et présente un intérêt tout particulier pour la construction d'échangeurs de chaleur.

Le brasage d'aluminium, sans flux, est actuellement réalisé le plus souvent par immersion de la pièce à braser dans un bain de métal d'apport liquide et par la mise en vibration du bain : cette mise en vibration est généralement réalisée à l'aide de sonotrodes reliées à un générateur d'ultrasons et fixées sur l'extérieur de la cuve contenant le métal d'apport. Une telle technique est notamment décrite dans le brevet des USA No. 3 680 200.

Ces procédés de brasage classiques présentent un certain nombre d'inconvénients bien connus des techniciens. Ces inconvénients, dus principalement à un manque d'homogénéité du champ ultrasonore, se traduisent généralement par un manque de mouillabilité causant des défauts locaux de métal d'apport à l'intérieur de la brasure, ce qui affaiblit celle-ci jusqu'à la rendre défectueuse.

Par ailleurs, notamment dans le cas de la brasure d'aluminium, on utilise généralement comme métal d'apport, des alliages de zinc et d'aluminium et de béryllium, comme dans le brevet français No. 2 195 501, ou encore des alliages d'aluminium et d'yttrium, germanium, indium, argent, comme dans le brevet français No. 2 201 950, ou encore d'autres alliages classiques utilisés pour la soudure ou la brasure de l'aluminium.

D'une manière générale, le but recherché est d'éviter toute souillure de la zone brasée, toute surchauffe nuisible aux pièces à braser et à l'équipement utilisé.

Le caractère important est le mouillage du métal de la pièce à braser par le métal d'apport en fusion.

Il est apparu qu'il est plus important selon l'invention que les ultrasons soient appliqués aux pièces à braser plutôt qu'au bain de brasage, car ainsi l'énergie ultrasonore est concentrée là où elle est la plus utile, c'est-à-dire au lieu même de la brasure.

L'invention a pour but de pallier les défauts et les inconvénients des procédés, dispositifs et métaux d'apport classiques.

Elle a pour objet un procédé pour le brasage sans flux de pièces métalliques dans lequel on soumet les pièces immergées dans un bain en fusion de métal d'apport à l'action d'ultrasons avant de les retirer dudit bain et de les laisser refroidir, caractérisé en ce qu'on met d'abord lesdites pièces en contact intime avec une sonotrode puis on immerge ensemble pièces et sonotrode dans le bain en fusion avant d'émettre les ultrasons par ladite sonotrode.

Pour la mise en œuvre d'un tel procédé appliqué au brasage de pièces en aluminium, il est particulièrement avantageux d'utiliser un métal d'apport constitué de zinc, ou de cadmium, ou d'un alliage renfermant au moins du zinc et du cadmium, et plus particulièrement d'un alliage binaire renfermant environ 66 % de cadmium et 34 % de zinc, fondant environ entre 265 et 305 °C.

La partie de la sonotrode appelée à être au contact du bain de métal d'apport est avantageusement en titane non allié, que l'on passive par oxydation thermique, préalablement à la première utilisation.

L'invention a également pour objet un dispositif pour le brasage mettant en œuvre un tel procédé caractérisé en ce qu'il comprend un bâti supportant un creuset pour un bain de métal d'apport en fusion, le fond du creuset étant traversé de façon étanche par une sonotrode coulissant sous l'action d'un vérin fixé sur le bâti, avec un générateur d'ultrasons associé à la sonotrode, et des moyens de chauffage, contrôlés, associés à ce creuset, l'extrémité active de la sonotrode étant creusée d'au moins une empreinte de forme complémentaire d'au moins une partie de la surface extérieure des pièces à braser, et constituant un évidement de dimensions légèrement supérieures à celles de l'enveloppe extérieure des pièces métalliques mettant lesdites pièces en contact intime avec la sonotrode, le vérin déplaçant alternativement l'extrémité active dans et hors du bain. Le document US-A-3 752 381 révèle un tel dispositif pour le brasage comprenant un bâti supportant un creuset pour un bain de métal d'apport en fusion, le fond du creuset étant traversé de façon étanche par une sonotrode déplaçable dans et hors du bain sous l'action d'un vérin fixé sur le bâti, avec un générateur d'ultrasons associé à la sonotrode et des moyens de chauffage contrôlés associés au creuset, l'extrémité active de ladite sonotrode étant creusée d'au moins une empreinte.

Dans un tel dispositif pour le brasage de crosses de tubes en U, l'empreinte creusée dans l'extrémité active de la sonotrode a avantageusement la forme d'un évidement semi-torique à génératrice en U de dimensions légèrement supérieures à celles de l'enveloppe extérieure des crosses.

Cette extrémité active est également, de préférence, en titane non allié, passivé. Un amplificateur, constitué par une entretoise métallique profilée, avantageusement en titane, est disposé entre le générateur d'ultrasons et la sonotrode.

Afin de protéger le générateur d'ultrasons d'un échauffement exagéré, il est avantageux de disposer un refroidisseur, notamment à air soufflé, entre la sonotrode et le générateur d'ultrasons.

Dans un tel dispositif, il est avantageux suivant l'invention que le passage de la sonotrode à travers le fond du creuset se situe en position de travail de la sonotrode à un nœud de vibrations ultrasonore, tandis que les joints entre sonotrode, amplificateur et générateur ultrasonore se situent de façon classique à des ventres de vibration ultrasonore.

Il est préférable, suivant l'invention, que des joints d'étanchéité à coefficient d'absorption ultrasonore élevé garnissent le passage de la sonotrode à travers le fond du creuset, afin d'éviter toute propagation parasite d'ultrasons dans le creuset.

L'invention a encore pour objet un métal d'apport pour le brasage de pièces en aluminium suivant le procédé et/ou le dispositif de l'invention, caractérisé en ce qu'il est constitué par un alliage renfermant au moins du zinc et du cadmium, de point de fusion inférieur à environ 450 °C.

L'invention sera mieux comprise à la lecture de la description détaillée qui va suivre et à l'examen des dessins annexés qui représentent à titre d'exemple non limitatif un mode de réalisation de l'invention. Sur ces dessins :

la figure 1 est une vue en élévation, de profil, d'un dispositif de brasage d'une crosse de deux tubes en U suivant l'invention, et,

la figure 2 est une vue de face, analogue à celle de la figure 1, du même dispositif, avec certaines parties en coupe.

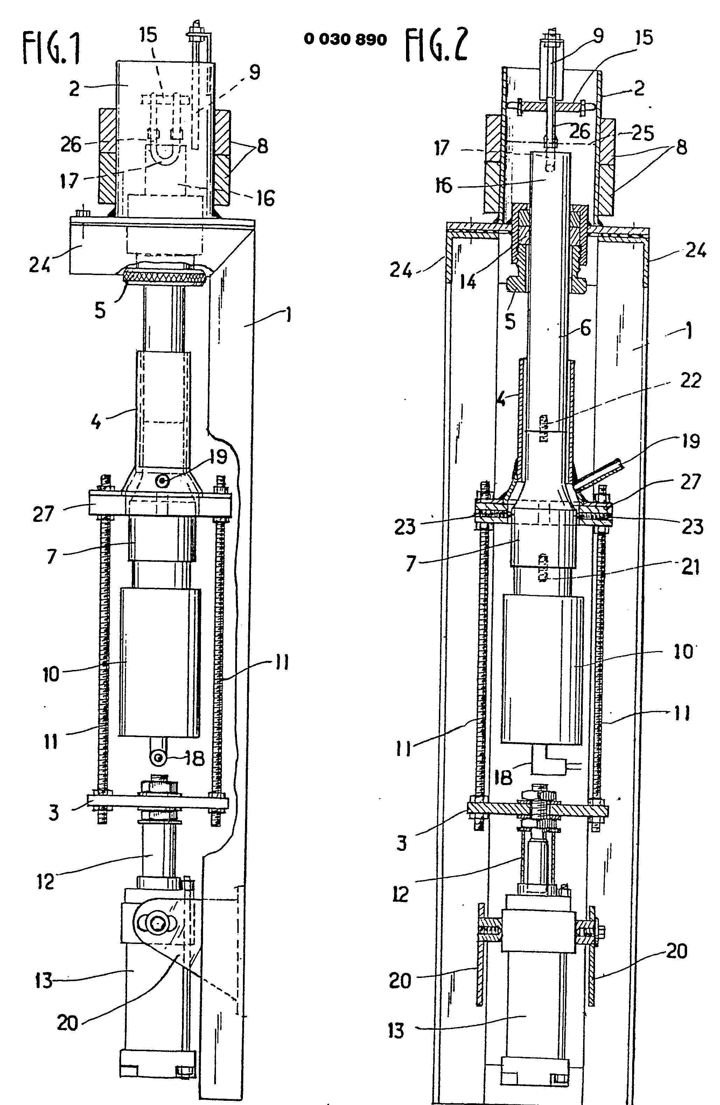

Le dispositif représenté sur les dessins comprend essentiellement un bâti rigide 1, vertical, terminé en haut par une potence 24 qui supporte un creuset 2 renfermant le métal d'apport en fusion jusqu'à un niveau indiqué par un trait interrompu en 25. Ce creuset 2 est chauffé par des résistances électriques extérieures annulaires classiques 8. La température à l'intérieur du bain est contrôlée par une sonde thermique 9.

A l'intérieur du creuset, un ensemble à braser 26 constitué de deux tubes dont les extrémités sont insérées à force respectivement dans les branches d'une crosse est calé par une bride 15 qui le centre, et qui coulisse librement à l'intérieur du creuset 2.

L'extrémité en U de la crosse 26 est supportée dans un évidement 17 de forme complémentaire creusée dans l'extrémité active 16 d'une sonotrode 6 en titane.

Cette sonotrode 6 coulisse de façon étanche à travers un presse-étoupe 5 garni de bagues d'étanchéité 14 en matériau résistant à la température et de coefficient d'absorption ultrasonore élevé tel que de l'amiante graphité, qui évite toute propagation parasite d'ultrasons dans le creuset.

Cette sonotrode 6 est rendue solidaire d'un amplificateur d'ultrasons 7, également en titane, par une vis axiale 22. L'amplificateur 7 est également rendu solidaire par une vis axiale 21 d'un générateur d'ultrasons 10 constitué avantageusement par un convertisseur piézo-électrique relié à une source l'électricité convenable par une canalisation 18. Avant la première utilisation, on fait subir à la sonotrode 6 une passivation par oxydation par chauffage dans l'air ambiant et à la pression atmosphérique à 450 °C environ pendant 24 heures. Ce traitement rend la sonotrode pratiquement insensible à la corrosion dans les conditions d'utilisation.

Un refroidisseur 4, constitué par une gaine métallique entourant la partie inférieure de la sonotrode 6 et la partie supérieure de l'amplificateur 7, permet un refroidissement sous l'action d'un jet d'air amené par une tubulure 19. L'amplificateur est rendu solidaire, par des vis radiales 23, d'une platine 27 reliée par quatre tiges filetées 11 à une bride 3 fixée à l'extrémité d'une entretoise 12, solidaire du piston d'un vérin 13 fixé par des pattes 20 au bâti 1.

Afin d'assurer une bonne transmission des ultrasons du générateur 10 à l'amplificateur 7, et à la sonotrode 6, la longueur totale de l'amplificateur 7, ainsi que la longueur de la sonotrode 6, sont des multiples de la demi-longueur d'onde des ultrasons émis par le générateur 10.

De même, les vis 23 sont situées à un nœud de vibrations du train d'ondes ultrasonores, afin de n'apporter aucune gêne à leur propagation.

En considérant les dessins, on voit que le générateur d'ultrasons 10, l'amplificateur 7, la sonotrode 6 forment un ensemble solidaire, mobile axialement sous l'action du vérin 13. Sous l'action de ce vérin, la sonotrode 6 coulisse à travers le presse-étoupe 5 de façon étanche, et permet les manœuvres d'immersion et d'émersion de la crosse 26, dans et hors du bain de métal d'apport en fusion.

Pour braser un ensemble crosse-tubes tel que 26, on commence par amener à l'état fondu le bain de métal d'apport, dont le niveau supérieur délimite la zone de brasage. Le refroidisseur 4 étant alimenté en air sous pression par la tubulure 19, on fait émerger l'extrémité active 16 de la sonotrode sous l'action du vérin 13. On dispose alors l'ensemble 26 dans l'empreinte 17 où elle repose sous son propre poids.

On fait ensuite descendre la sonotrode jusqu'à sa position immergée sous l'action du vérin 20, on laisse monter en température, puis on met en marche le générateur d'ultrasons pendant un temps suffisant pour assurer le décapage, sans corrosion nuisible des pièces à braser et leur mouillage par le métal d'apport. On fait émerger à nouveau, sous l'action du vérin 13, la sonotrode portant la crosse brasée, on éloigne de la sonotrode l'ensemble crosse-tubes et on laisse refroidir jusqu'à durcissement de la brasure.

A titre d'exemple de réalisation pratique, on peut utiliser une sonotrode en titane de la nuance commerciale T40, d'un diamètre d'environ 40 mm, pour une longueur d'environ 250 mm. On utilise un émetteur ultrasonore du type piézo-électrique émettant des ultrasons sous une fréquence d'environ 20 kHz sous une puissance de 1 100 W, d'amplitude de vibration nominale d'environ 11,2 µm.

Pour des tubes en aluminium d'environ 10 mm de diamètre extérieur et un métal d'apport binaire zinc-cadmium 34/66 % fondant entre environ 265 et 305 °C, le temps de chauffage est de l'ordre de 40 secondes, tandis que l'émission ultrasonore est de 5 secondes environ.

Bien entendu, l'invention n'est nullement limitée au mode de réalisation décrit et représenté, elle est susceptible de nombreuses variantes accessibles à l'homme de l'art, suivant les applications envisagées et sans s'écarter pour cela du cadre de l'invention.

C'est ainsi que, suivant les applications envisagées, on peut utiliser n'importe quelle sonotrode de type classique convenable et des émetteurs ultrasonores à magnétostriction, électrostriction, aussi bien qu'à quartz, de longueurs d'ondes différentes. On peut également aménager un dispositif suivant l'invention pour le brasage simultané de plusieurs ensembles. On peut encore utiliser n'importe quel métal d'apport convenable pour des applications particulières.

**Revendications**

1. Procédé pour le brasage sans flux de pièces métalliques (26) dans lequel on soumet les pièces immergées dans un bain en fusion de métal d'apport (25) à l'action d'ultrasons avant de les retirer dudit bain et de les laisser refroidir, caractérisé en ce qu'on met d'abord lesdites pièces (26) en contact intime avec une sonotrode (6) puis on immerge ensemble pièces et sonotrode dans le bain en fusion avant d'émettre les ultrasons par ladite sonotrode.

2. Procédé suivant la revendication 1, caractérisé en ce qu'au moins la partie (16) de la sonotrode (6) appelée à être au contact du bain de métal d'apport est en titane non allié que l'on passive par oxydation thermique préalablement à la première utilisation.

3. Dispositif pour le brasage suivant le procédé de l'une des revendications 1 et 2, comprenant un bâti (1) supportant un creuset (2) pour un bain de métal d'apport en fusion, le fond dudit creuset étant traversé de façon étanche par une sonotrode (6) déplaçable dans et hors du bain sous l'action d'un vérin (13) fixé sur ledit bâti, avec un générateur d'ultrasons (10) associé à ladite sonotrode et des moyens de chauffage contrôlés associés audit creuset, l'extrémité active (16) de ladite sonotrode étant creusée d'au moins une empreinte (17), dispositif caractérisé en ce que ladite empreinte (17) est de forme complémentaire d'au moins une partie de la surface extérieure des pièces à braser et constitue un évidement de dimensions légèrement supérieures à celles de l'enveloppe extérieure des pièces métalliques (26) mettant lesdites pièces en contact intime avec la sonotrode.

4. Dispositif suivant la revendication 3, caractérisé en ce que le passage de la sonotrode à travers le fond du creuset se situe, en position active de ladite sonotrode, à un nœud de vibrations ultrasonores.

5. Dispositif suivant l'une des revendications 3 et 4, caractérisé en ce que le passage de la sonotrode à travers le fond du creuset est garni de joints d'étanchéité en matériau à coefficient d'absorption ultrasonore élevé.

6. Dispositif pour le brasage de crosses de tubes en U, suivant l'une des revendications 3 à 5, caractérisé en ce que l'empreinte (17) creusée dans l'extrémité active de la sonotrode a la forme d'un évidement semi-torique à génératrice en U de dimensions légèrement supérieures à celles de l'enveloppe extérieure desdites crosses.

7. Dispositif suivant l'une des revendications 4 à 6, caractérisé en ce qu'au moins l'extrémité active (16) de la sonotrode est en titane non allié, passivé.

8. Dispositif suivant l'une des revendications 3 à 7, caractérisé en ce que le générateur d'ultrasons (10) est relié à la sonotrode (6) par un amplificateur (7) constitué par une entretoise métallique profilée.

**Claims**

1. Process for fluxless brazing of metal members (26) in which the members immersed in a molten filling-metal bath (25) are subjected to ultrasonic action before being withdrawn from said bath and being allowed to cool down, characterized in that said members (26) are set in intimate contact with an ultrasonic transducer (6) and said members and ultrasonic transducer are together immersed in the molten metal bath prior to emission of the ultrasounds by said ultrasonic transducer.

2. Process according to claim 1, characterized in that at least that part (16) of the ultrasonic transducer (6) which is destined to be in contact with the filling-metal bath is of unalloyed titanium which is passivated through thermal oxidation previously to the first utilization.

3. Apparatus for the brazing in accordance with claim 1 or 2, comprising a frame (1) supporting a crucible (2) for a molten filling-metal bath, the bottom of said crucible being penetrated in a fluid-tight manner by an ultrasonic transducer (6) displaceable into and out of the bath by means of a jack (13) secured on said frame, an ultrasonic generator (10) associated with said ultrasonic transducer, and controlled heating means associated with said crucible, the active end (16) of said ultrasonic transducer being hollowed out by at least one depression (17), the apparatus being characterized in that said depression (17) is of shape complementary to at least a part of the external surface of the members to be brazed and forms a cavity of dimensions slightly greater than those of the outer envelope of the metal members (26) setting said members in intimate contact with the ultrasonic transducer.

4. Apparatus according to claim 3, characterized in that the passage of the ultrasonic transducer through the bottom of the crucible is located, in the active position of said ultrasonic transducer, at a node of ultrasonic vibrations.

5. Apparatus according to claim 3 or 4, characterized in that the passage of the ultrasonic transducer through the bottom of the crucible is provided with fluid-tight packings of material of high coefficient of ultrasonic absorption.

6. Apparatus for the brazing of the curved portions of U-tubes, according to any one of claims 3 to 5, characterized in that the depression (17) hollowed out in the active end of the ultrasonic transducer has the form of a semitoroidal U-generated cavity of dimensions slightly greater than those of the outer envelope of said curved portions.

7. Apparatus according to any one of claims 4 to 6, characterized in that at least the active end (16) of the ultrasonic transducer is of passivated unalloyed titanium.

8. Apparatus according to any one of claims 3 to 7, characterized in that the ultrasonic generator (10) is connected to the ultrasonic transducer (6) by an intensifier (7) constituted by a shaped metallic bridging member.

## Ansprüche

1. Verfahren zum flußmittelfreien Löten von Metallteilen (26), wobei die in eine Schmelze (25) von Zusatzmetall eingetauchten Teile mit Ultraschall behandelt werden, bevor sie aus der Schmelze herausgenommen werden und abkühlen können, dadurch gekennzeichnet, daß die genannten Teile (26) zunächst in engen Kontakt mit einer Ultraschallelektrode (Sonotrode) (6) gebracht und dann Teile und Sonotrode gemeinsam in die Schmelze eingetaucht werden, bevor die Sonotrode zur Aussendung von Ultraschall veranlaßt wird.

2. Verfahren nach Anspruch 1, dadurch gekennzeichnet, daß zumindest der Abschnitt (16) der Sonotrode (6), der dazu vorgesehen ist, mit der Zusatzmetallschmelze in Kontakt zu kommen, aus unlegiertem Titan besteht, das vor der ersten Benutzung durch thermische Oxydation passiviert wird.

3. Vorrichtung zum Löten unter Anwendung des Verfahrens nach Anspruch 1 oder 2, mit einem Gestell (1), das einen eine Schmelze von Zusatzmetall enthaltenden Tiegel (2) trägt, durch dessen Boden dichtend eine Sonotrode (6) geführt ist, die unter der Wirkung eines an dem Gestell angebrachten Arbeitszylinders (13) in die Schmelze hinein und aus ihr heraus führbar ist, ferner mit einem mit der Sonotrode verbundenen Ultraschallgenerator (10) und einer dem Tiegel zugeordneten regelbaren Heizung, wobei das wirksame Ende (16) der Sonotrode eine Aushöhlung in Form von mindestens einer Eintiefung (17) aufweist, dadurch gekennzeichnet, daß die Eintiefung (17) in ihrer Form komplementär zu zumindest einem Teil der Außenfläche der zu lötenden Teile ist und eine Ausnehmung bildet, deren Abmessungen etwas größer sind als die des Außenmantels der Metallteile (26), wodurch die genannten Teile in engen Kontakt mit der Sonotrode gelangen.

4. Vorrichtung nach Anspruch 3, dadurch gekennzeichnet, daß der Durchtritt der Sonotrode durch den Tiegelboden sich bei in Wirkstellung gebrachter Sonotrode in einem Knoten der Ultraschallschwingung befindet.

5. Vorrichtung nach Anspruch 3 oder 4, dadurch gekennzeichnet, daß der Durchtritt der Sonotrode durch den Tiegelboden mit Dichtungen aus einem Werkstoff mit hohem Ultraschallabsorptionskoeffizienten versehen ist.

6. Vorrichtung zum Löten von U-förmigen Rohrbogen, nach einem der Ansprüche 3 bis 5, dadurch gekennzeichnet, daß die in das wirksame Ende der Sonotrode geschnittene Eintiefung (17) die Form einer halbtorischen Ausnehmung mit U-förmiger Erzeugenden hat, deren Abmessungen diejenigen des Außenmantels der genannten Rohrbogen etwas übersteigen.

7. Vorrichtung nach einem der Ansprüche 4 bis 6, dadurch gekennzeichnet, daß zumindest das wirksame Ende (16) der Sonotrode aus passiviertem, unlegiertem Titan besteht.

8. Vorrichtung nach einem der Ansprüche 3 bis 7, dadurch gekennzeichnet, daß der Ultraschallgenerator (10) mit der Sonotrode (6) über einen durch ein Metallprofil-Abstandsstück gebildeten Ultraschallverstärker (7) verbunden ist.

FIG.1

0 030 890

FIG.2